# EUROPÄISCHE PATENTSCHRIFT

(11) **EP 1 322 428 B1**
(45) Veröffentlichungstag und Bekanntmachung des Hinweises auf die Patenterteilung: **11.05.2005**
(21) Anmeldenummer: 01944857.0
(22) Anmeldetag: 09.07.2001
(51) Int. Cl.: B05B 13/04, E01C 23/22, E01F 9/04, G09F 19/22

(54) **VERFAHREN ZUR HERSTELLUNG VON MARKIERUNGEN SOWIE EIN MOBILES GERÄT ZUR DURCHFÜHRUNG DES VERFAHRENS**
METHOD FOR PRODUCING MARKINGS AND A MOBILE DEVICE FOR CARRYING OUT THIS METHOD
PROCEDE DE PRODUCTION DE MARQUAGES ET APPAREIL MOBILE POUR LA MISE EN OEUVRE DUDIT PROCEDE

(30) Priorität: 02.10.2000 CH 193000
(43) Veröffentlichungstag der Anmeldung: 02.07.2003
(73) Patentinhaber: UDW, 8832 Wollerau (CH)
(72) Erfinder: ULRICH, Franz, CH-8832 Wilen b. Wollerau (CH)
(74) Vertreter: Luchs, Willi
(86) Internationale Anmeldenummer: PCT/CH2001/000427
(87) Internationale Veröffentlichungsnummer: WO 2002/028541

(56) Entgegenhaltungen:
- US-A- 5 052 854
- US-A- 5 529 433
- US-A- 5 681 129

## Beschreibung

Die Erfindung bezieht sich auf ein Verfahren zur Herstellung von Markierungen auf einer stationären Fläche gemäss dem Oberbegriff des Anspruches 1, sowie auf ein mobiles Gerät zur Durchführung des Verfahrens.

Die konventionellen Verfahren zur Herstellung von Markierungen, wie z.B. Druckverfahren, Siebdruck oder dergleichen eignen sich nicht für ein Markieren von übergrossen Flächen von mehreren Quadratmetern, wie zum Beispiel für eine Markierung von natürlichen Oberflächen, wie Rasen, Kiesbette, Strassen, Wände, Wiesen, Äcker oder ähnlichem.

Die US-A-5 681 129 offenbart ein mobiles Gerät zur Markierung von Grasfeldern durch Biegung der Grashalme. Ein Positionierungssystem erfasst die Position des Geräts, womit nach Vorlage verschiedene Bürsten für die Biegung der Grashalme betätigt werden.

Die US-A-5 529 433 offenbart ein mobiles Gerät, ein Fahrzeug, welches mit einem mehrere Düsen zur Markierung einer Fläche aufweisenden Markierungskopf ausgestattet ist. Der Markierungskopf ist einem aus einer Transportstellung in eine horizontale Arbeitsstellung verstellbaren Rahmen zugeordnet und in diesem in der horizontalen Ebene (in x-y-Richtungen) verstellbar (es ist auch eine vertikale Verstellung in z-Richtung sowie eine Verschwenkung um eine vertikale Achse w möglich). An einem gewählten Ort mit dem Fahrzeug angelangt, wird der Rahmen in die Arbeitsstellung oberhalb der zu markierenden Fläche gesenkt und die Markierung durch die von einer elektronischen Steuerung gemäss einer zu reproduzierenden Vorlage angesteuerten Bewegungen des Markierungskopfes (bei entsprechender Ansteuerung der Düsen) erzeugt. Während der Markierung findet keine Fahrzeugbewegung statt. Die Grösse der zu markierenden Fläche ist somit praktisch durch die Grösse des Rahmens definiert, wobei Mittel vorgesehen sind, den Rahmen etwas zu vergrössern oder zu verschwenken, um auch die in ihrer Fläche die normale Rahmengrösse etwas überragenden Markierungen fertigstellen zu können.

Mit der Erfindung soll die Aufgabe gelöst werden, ein Verfahren sowie ein mobiles Gerät zu schaffen, mit dem nahezu beliebig grosse Markierungen auch auf unebenem Grund und in unterschiedlichen Massstäben nach einer Vorlage hergestellt werden können.

Diese Aufgabe wird erfindungsgemäss durch ein Verfahren mit den Merkmalen des Anspruches 1 und ein mobiles Gerät mit den Merkmalen des Anspruches 7 gelöst.

Dadurch, dass die Ansteuerung der Düsen in Koordination zu der aktuellen Position des während der Erzeugung der Markierung fahrenden Gerätes und der räumlichen Koordinaten jeder einzehen Düse mitbewegten Markierungskopfes erfolgt, wobei diese Positionen fortlaufend durch ein im Gerät integriertes und/oder ausserhalb der zu markierenden Fläche angeordnetes Positionierungssystem und/oder durch ein im Gerät enthaltenes Satelliten-Navigationssystem erfasst und der Steuerung bekanntgegeben wird, lassen sich nahezu beliebige Markierungen auf Flächen wie Sandböden, asphaltierten Böden, Naturböden, Schneefeldern oder dergleichen aufbringen. Mit solchen Markierungen lassen sich Muster, Bilder, Schriften, Firmensignete, Verzierungen, Signalisationshinweise etc. auch mehrfarbig schnell und kostengünstig erzeugen. Das mobile Gerät kann an jedem beliebigen Ort permanent überwacht und hierbei sehr genau gesteuert werden.

Ein Ausführungsbeispiel sowie weitere Vorteile der Erfindung sind anhand der Zeichnung näher erläutert. Es zeigt:
- Fig.1: eine schematische Darstellung einer nach dem erfindungsgemässen Verfahren in Herstellung befindlichen grossflächigen Markierung, und
- Fig.2: eine schematische Seitenansicht eines erfindungsgemässen mobilen Gerätes.

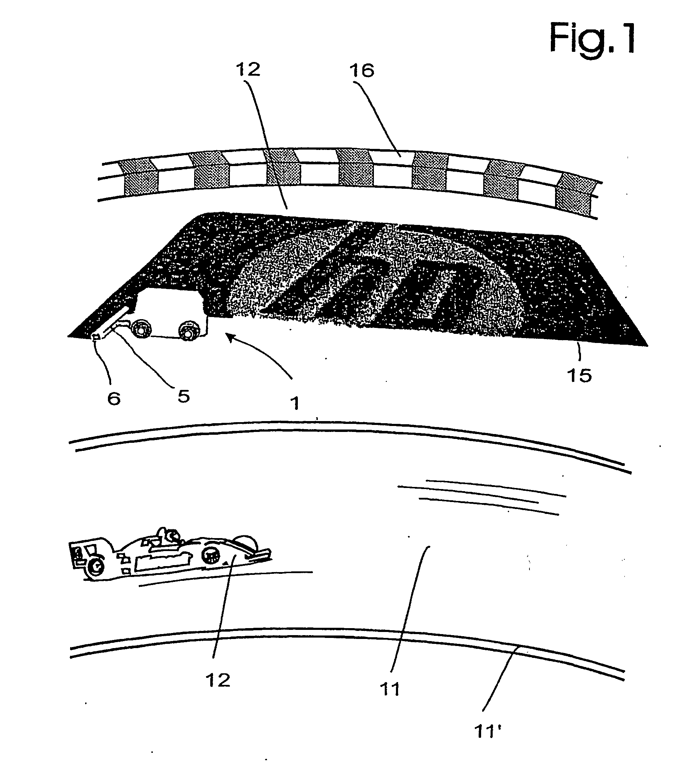

Fig. 1 zeigt schematisch eine Anordnung im Rennsportbereich, beispielsweise bei der Formel 1. Es sind zu diesem Zwecke üblicherweise eine Rennpiste 11 mit Pistenrändern 11', einem angedeuteten Rennwagen 12, und neben der Piste 11 zu Sicherheitszwecken angeordnete Auslaufzonen vorgesehen, wobei letztere heutzutage in der Regel als Kiesbetten 12 und abschliessende Abschrankungen 16 ausgebildet sind.

Zur Ausnutzung dieses sehr grossflächigen Kiesbettes 12, auf dem sich keinerlei Gegenstände, wie Werbetafeln, befinden dürfen, wird eine Markierung 15 nach dem erfindungsgemässen Verfahren hergestellt. Damit können diese freistehenden Flächen insbesondere zu Werbezwecken genutzt werden, ohne dass für die Fahrer irgendwelche zusätzliche Gefahren entstehen würden.

Für das Herstellungsverfahren dieser vorliegend als Firmensignet ausgelegten Markierung 15 wird ein an einem mobilen Gerät 1, vorzugsweise einem Fahrzeug, angeordneter Markierungskopf 5 mit einer oder mehreren Düsen 6 entlang der zu markierenden Fläche 12 bewegt. Im Gerät 1 sind hierbei elektronische Steuerungsmittel vorhanden, mit denen die Düsen 6 des Markierungskopfes 5 in Koordination zu der aktuellen Position des Gerätes 1 gemäss der zu reproduzierenden Vorlage angesteuert werden.

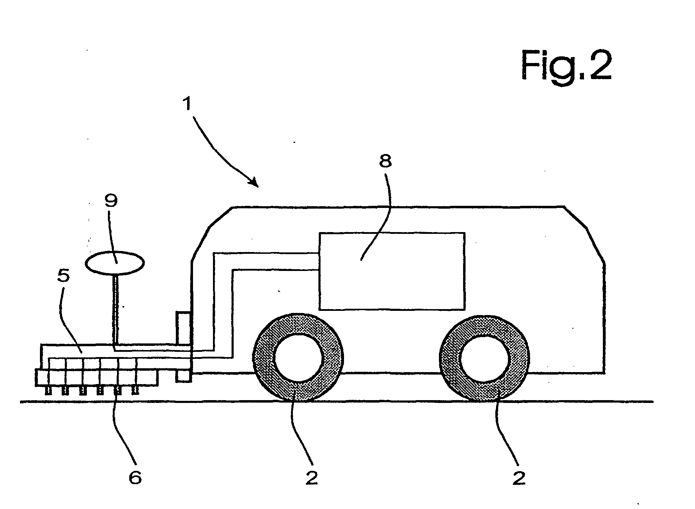

Fig.2 zeigt dieses motorisch angetriebene mobile Gerät, vorliegend ein fernsteuerbares Fahrzeug 1, welches mit Rädern 2 für die Vorwärtsbewegung versehen ist. Der Markierungskopf 5 ist vorteilhaft höhenverstellbar ausgebildet und er hat eine oder mehrere in Reihe angeordnete Spritzdüsen 6, die je von einem Farbtank versorgt werden. Die Anzahl Reihen, quer zur Fahrtrichtung des Gerätes gesehen, richtet sich nach dem Erfordernis, ob ein-, zwei- oder mehrfarbig gedruckt werden soll. So müssen zum Beispiel für einen zweifarbigen Druck in Fahrtrichtung je zwei Düsen mit der jeweiligen Farbe vorhanden sein. Ein Steuerkasten 8 enthält die elektronischen Steuermittel einschliesslich Computer mit integrierter Software zur Umsetzung der von der Vorlage ausgehenden Steuersignale.

Die Positionsbestimmung des Gerätes muss in Echtzeit und mit grösstmöglicher Genauigkeit erfolgen. Dazu eignet sich beispielsweise ein Satelliten-Navigationssystem (differentielles GPS) oder ein motorisierter Tachymeter mit automatischer Zielverfolgung, die jeweils eine zentimetergenaue Positionsbestimmung des Gerätes ermöglichen. Zusätzlich kann das Gerät mit wenigstens einem weiteren Rückkopplungssensor ausgestattet sein, welcher der Steuerung den zurückgelegten Weg und/oder ein eventuelles Abdriften vom Kurs bekanntgibt, um hieraus allenfalls entstehende Feinkorrekturen vorzunehmen.

Das Gerät ist während des Spritzvorganges zweckmässigerweise derart angesteuert, dass es in parallelen Bahnen abfährt. Am Ende einer jeweilgen Bahn wird es gewendet und in eine Position gebracht, dass es mit Vorteil an die davor gespritzte Bahn anschliesst, wie dies aus Fig. 1 ersichtlich ist. Es ist jedoch auch denkbar, dass das Gerät kurvenförmige Bahnen abfährt und dabei zum Beispiel einen Streifen von einer bestimmten Breite entlang einer Rundstrecke bedruckt.

Auf diese Weise lassen sich grossflächige graphische Elemente auf eine beliebige, auch leicht unebene Unterlage aufbringen. Solche Markierungen können entweder zur Signalisierung, beispielsweise auf Strassen und Plätzen oder zu Werbezwecken, wie bei Einflugschneisen von Flughäfen Verwendung finden.

Bei einer konkreten Markierung nach der Erfindung, zum Beispiel eines Logos einer Firma auf einem Kiesbett - wie dies beispielhaft in Fig.1 verdeutlicht ist - wird wie folgt vorgegangen:

Vorgängig wird die Topographie des zu bedruckenden Kiesbettes vermessen, damit dieses in Form eines digitalen Geländemodells verfügbar ist. Aufgrund der gemessenen geographischen Lage kann das Logo nun mit einer primär im Steuerungsmittel enthaltenden Software erfasst werden. Es ist hierbei jedes auf dem Kiesbett zu plazierende Pixel des Logos durch Transformation einer bestimmten Koordinate zugeordnet.

Anschliessend fährt das Gerät 1 über das zu bedruckende Objekt. In Echtzeit werden mittels des Satelliten-Positionierungssystems die genauen räumlichen Koordinaten jeder einzelnen Düse des Markierungskopfes (Druckbalkens) bestimmt. Die Software vergleicht diese Einzelkoordinaten mit den vorgegebenen Sollkoordinaten der einzelnen Pixel des Logos und es wird jede einzelne Farbdüse jeweils dann geöffnet, wenn sie sich lagemässig genau an der Sollposition des georeferenzierten Pixels befindet.

Als zusätzliches Kontrollmittel können durch das Vorsehen von Rückkopplungssensoren, welche zum Beispiel den Rand der vorgängig bedruckten Bahn ermitteln, Abweichungen festgestellt und ebenso via die Software korrigiert werden.

Zusätzlich von Düsen könnten auch ein Mähwerk verwendet werden, sodass auf Rasenflächen Markierungen gefräst werden. Auch könnten die Düsen statt Farbe Samen ausbringen, um auf diese Weise nach dem Quellen der Samen eine Kontrastwirkung zu erzeugen. Auch könnte ein Farbpulver verwendet werden, das nach dem Auftragen mit dem erfindungsgemässen Gerät eingebrannt wird.

Die Erfindung ist mit dem oben erläuterten Ausführungsbeispiel ausreichend dargetan. Selbstverständlich könnte sie noch in anderen Varianten ausgeführt sein. So könnte der Markierungskopf 5 mit Mitteln ausgerüstet sein, wie zum Beispiel mit Werkzeugen für eine Oberflächenbehandlung, wie ein Aufrauhen, ein Gravieren, ein Umstechen, Mähen oder ähnlichem.

Das System erlaubt es im weiteren, dass die Position eines Betrachters oder einer Kamera berücksichtigt wird. Die vorgesehenen Markierungen werden dementsprechend vorbereitet, so dass sie beliebig verzerrt bzw. auf eine Geländeoberfläche projiziert werden, so dass sie nur aus annähernd einer bestimmten Position heraus erkannt werden können. Somit könnte beim Schwenken einer Kamera bspw. bei einem Autorennen erst in der Endposition lesbar werden, wodurch eine zusätzliche Aufmerksamkeit des Betrachters bewirkt würde.

## Patentansprüche

1. Verfahren zur Herstellung von Markierungen (15) auf einer stationären Fläche, bei dem ein mobiles Gerät (1) entlang der zu markierenden Fläche bewegt wird und die Positionen des Gerätes (1) fortlaufend durch ein im Gerät (1) integriertes und/oder ausserhalb der zu markierenden Fläche angeordnetes Positionierungssystem und/oder durch ein im Gerät (1) enthaltenes Satelliten-Navigationssystem erfasst und der Steuerung bekanntgegeben wird, **dadurch gekennzeichnet, dass**
ein an dem Gerät (1) angeordneter Markierungskopf (5) mit mehreren Düsen (6) vorgesehen ist, bei dem die räumlichen Koordinaten jeder einzelnen Düse (6) mittels des Positionierungssystems bestimmt und die Düsen (6) durch elektronische Steuerungsmittel (8) gemäss einer zu reproduzierenden Vorlage angesteuert und die Markierungen (15) erzeugt werden, wobei diese Ansteuerung der Düsen in Koordination zu der aktuellen, von dem Positionierungssystem und/oder durch das Satelliten-Navigationssystem erfassten Position des während der Erzeugung der Markierung fahrenden Gerätes (1) und des mit diesem mitbewegten Markierungskopfes (5) erfolgt.

2. Verfahren nach Anspruch 1, **dadurch gekennzeichnet, dass** die zu erzeugende Markierung nach der gemessenen geographischen Lage der zu markierenden Fläche mit einer Software erfasst wird, dass in Echtzeit mittels des Positionierungssystems die genauen räumlichen Koordinaten jeder einzelnen Düse (6) des mit dem Gerät (1) mitbewegten Markierungskopfes (5) bestimmt werden, wobei die Software diese Einzelkoordinaten mit den vorgegebenen Sollkoordinaten einzelner Pixel der Markierung vergleicht und jede einzelne Düse (6) jeweils dann geöffnet wird, wenn sie sich lagemässig an der Sollposition des georeferenzierten Pixels befindet.

3. Verfahren nach Anspruch 1 oder 2, **dadurch gekennzeichnet, dass** das Gerät (1) während des Markierungsvorganges derart angesteuert ist, dass es in parallelen Bahnen fährt und dass es am Ende einer jeweiligen Bahn gewendet und in eine Position gebracht wird, die vorzugsweise an die davor markierte Bahn anschliesst.

4. Verfahren nach Anspruch 1 oder 2, **dadurch gekennzeichnet, dass** das Gerät (1) kurvenförmige Bahnen abfährt und dabei zum Beispiel einen Streifen von einer bestimmten Breite entlang einer Rundstrecke bedruckt.

5. Verfahren nach einem der Ansprüche 1 bis 4, **dadurch gekennzeichnet, dass** grossflächige vorgegebene graphische Elemente, vorzugsweise mit einer Grösse von mehreren Quadratmetern, erzeugt werden.

6. Verfahren nach einem der vorhergehenden Ansprüche 1 bis 5, **dadurch gekennzeichnet, dass** die Markierung (15) auf Böden, Feldern, Schneeflächen, Plakaten, Textilien, Wänden, Fassaden oder dergleichen erzeugt wird.

7. Mobiles Gerät zur Durchführung des Verfahrens nach einem der Ansprüche 1 bis 6, mit wenigstens einem mit mehreren Düsen (6) zur Erzeugung von Markierungen (15) versehenen Markierungskopf (5), wobei elektronische Steuerungsmittel (8) zur Ansteuerung der Düsen (6) gemäss einer zu reproduzierenden Vorlage vorhanden sind, wobei
ein Positionierungs- bzw. Satelliten-Navigationssystem für die Bestimmung der Positionen des mobilen Gerätes (1) und der räumlichen Koordinaten jeder einzelnen Düse des mitbewegten Markierungskopfes (5) und für die gesteuerte Bewegung des Gerätes (1) vorgesehen ist, das mit den elektronischen Steuerungsmitteln (8) wirkverbunden ist.

8. Mobiles Gerät nach Anspruch 7, **dadurch gekennzeichnet, dass** das Positionierungssystem im Gerät (1) integriert und/oder ausserhalb der zu markierenden Fläche angeordnet und/oder als ein Satelliten-Navigationssystem wie das GPS oder Glonass ausgeführt ist.

9. Mobiles Gerät nach Anspruch 7 oder 8, **dadurch gekennzeichnet, dass** die Düsen (6) als Spritzdüsen für einen Farbauftrag oder für ein partielles Einsähen von Pflanzen ausgebildet sind.

10. Mobiles Gerät nach einem der Ansprüche 7 bis 9, **dadurch gekennzeichnet, dass** die elektronischen Steuermittel (8) Organe umfassen, mit denen der Reproduktionsmassstab veränderbar ist.

## Claims

1. Method for producing markings (15) on a stationary area, with which a mobile device (1) is moved along the surface to be marked and the positions of the device (1) are consecutively recorded and sent to the control by means of a positioning system integrated in the device (1) and/or outside of the surface to be marked, and/or by means of a navigation system via satellite integrated in the device (2), **characterised in that**
a marking head (5) is arranged on the device (1) with several nozzles (6), with which the spatial co-ordinates of each individual nozzle (6) are determined by the positioning system, and the nozzles (6) arc controlled by electronic means of control (8) in accordance with the model to be reproduced and the markings (15) are created, whereby this controlling of the nozzles is made in co-ordination with the actual recorded position of the device (1) and of the marking head moving during the marking by the positioning system and/or the navigation system via satellite.

2. Method according to Claim 1, **characterised in that** the logo to be produced is recorded according to the measured geographical position of the area to be marked, with software, that the precise spatial co-ordinates of each individual nozzle (6) of the marking head (5) moving together with the device (1) are determined in real time by means of the positioning system, whereupon the software compares the individual co-ordinates with the specified ideal co-ordinates of the individual pixel of the logo and each individual nozzle (6) is then opened respectively, when it is located precisely in the desired position of the georeferenced pixel.

3. Method according to claim 1 or 2, **characterised in that** the device (1) is controlled during the marking procedure in such a way that it runs in parallel tracks and that at the end of any respective track it is turned and brought into a position, which advantageously connects to the previously marked track.

4. Method according to claim 1 or 2, **characterised in that** the device (1) follows curving tracks and thus for example prints a stripe of a specified width along a curve.

5. Method according to one of the previous claims 1 to 4, **characterised in that** large-scale specified graphic elements, advantageously with a size of several square metres, are produced.

6. Method according to one of the previous claims 1 to 5, **characterised in that** the marking (15) is made on the ground, fields, snowfields, posters, textiles, walls, facades or similar.

7. Mobile device for the realisation of the method according to one of the previous claims 1 to 6, there is at least one marking head (5) with several nozzles (6) for achieving a marked area (15), whereby electronic means of control (8) are arranged to control the nozzles (6) in accordance with the model to be reproduced, that there is a positioning- respectively a navigation system via satellite for determining the positions of the mobile device (1) and the spatial co-ordinates of each individual nozzle of the marking head (5) moved with it and for the controlled movement of the device (1), that is connected together with the electronic means of control (8).

8. Mobile device according to claim 7, **characterised in that** the positioning system is realized as contained within the device (1) and/or positioned outside of the surface to be marked and/or by a navigation system via satellite, such as GPS or Glonass.

9. Mobile device according to claim 7 or 8, **characterised in that** the nozzles (6) are provided as spray nozzles for the application of dye or for a partial sowing of plants.

10. Mobile device according to one of the previous claims 7 to 9, **characterised in that** the electronic means of control (8) includes organs with which the scale of reproduction can be adjusted.

## Revendications

1. Procédé pour produire des marquages (15) sur une surface fixe, selon lequel un appareil (1) mobile se déplace le long de la surface à marquer et les positions de l'appareil (1) sont continuellement enregistrées par un système de localisation intégré à l'appareil (1) et/ou placé à l'extérieur de la surface à marquer et/ou par un système de navigation par satellite placé dans l'appareil (1) et sont communiquées à la commande,
**caractérisé en ce que**
on prévoit une tête de marquage (5), disposée sur l'appareil (1) et munie de plusieurs buses (6), dans lequel les coordonnées spatiales de chacune des buses (6) particulières sont déterminées à l'aide du système de localisation et les buses (6) sont commandées par des moyens de commande (8) électroniques en fonction d'un modèle à reproduire et les marquages (15) sont réalisés, cette commande des buses ayant lieu en coordination avec la position instantanée - enregistrée par le système de localisation et/ou par le système de navigation par satellite - de l'appareil (1) mobile pendant que le marquage est réalisé et la position de la tête de marquage (5) que l'appareil entraîne.

2. Procédé selon la revendication 1, **caractérisé en ce que**
le marquage à produire est enregistré par un logiciel selon la position géographique mesurée de la surface à marquer, les coordonnées spatiales exactes de chaque buse (6) particulière de la tête de marquage (5) entraînée par l'appareil (1) sont déterminées en temps réel à l'aide du système de localisation, le logiciel comparant alors ces coordonnées particulières aux coordonnées de consigne prédéfinies de pixels particuliers du marquage et chaque buse (6) particulière étant ouverte si sa position est celle de la position de consigne du pixel géographiquement référencé.

3. Procédé selon la revendication 1 ou 2, **caractérisé en ce que**
pendant l'opération de marquage l'appareil (1) est commandé de telle manière qu'il se déplace sur des trajectoires parallèles et il est tourné à l'extrémité de chaque trajectoire et est placé dans une position qui se raccorde de préférence à la trajectoire marquée en amont.

4. Procédé selon la revendication 1 ou 2, **caractérisé en ce que**
l'appareil (1) parcourt des trajectoires courbes et imprime alors par exemple une bande d'une largeur déterminée le long d'une trajectoire circulaire.

5. Procédé selon l'une des revendications 1 à 4, **caractérisé en ce que**
on produit des éléments graphiques prédéfinis de grande surface, de préférence d'une taille de plusieurs mètres carrés.

6. Procédé selon l'une des revendications précédentes 1 à 5, **caractérisé en ce que**
les marquages (15) sont produits sur des sols, des champs, des surfaces enneigées, des affiches, des tissus, des murs, des façades, etc.

7. Appareil mobile pour exécuter le procédé selon l'une des revendications 1 à 6, équipé d'au moins une tête de marquage (5) munie de plusieurs buses (6) pour produire des marquages (15), dans lequel se trouvent des moyens de commande (8) électroniques pour commander les buses (6) en fonction d'un modèle à reproduire, un système de localisation ou un système de navigation par satellite étant prévu pour déterminer les positions de l'appareil mobile (1) et les coordonnées spatiales de chaque buse particulière de la tête de marquage (5) entraînée et pour assurer un déplacement commandé de l'appareil (1) qui est lié fonctionnellement aux moyens de commande (8) électroniques.

8. Appareil mobile selon la revendication 7, **caractérisé en ce que**
le système de localisation est intégré dans l'appareil (1) et/ou est disposé en dehors de la surface à marquer et/ou est un système de navigation par satellite comme le GPS ou comme Glonass.

9. Appareil mobile selon la revendication 7 ou 8, **caractérisé en ce que**
les buses (6) sont des buses de pulvérisation pour appliquer de la peinture ou pour semer en partie des plantes.

10. Appareil mobile selon l'une des revendications 7 à 9, **caractérisé en ce que** les moyens de commande (8) électroniques comprennent des organes à l'aide desquels on peut modifier l'échelle de la reproduction.
